(19) Europäisches Patentamt
European Patent Office
Office européen des brevets

(11) Veröffentlichungsnummer: **0 423 563 A1**

# (12) EUROPÄISCHE PATENTANMELDUNG

(21) Anmeldenummer: **90119138.7**

(51) Int. Cl.5: **C09B 29/00**

(22) Anmeldetag: **05.10.90**

(30) Priorität: **17.10.89 DE 3934544**

(43) Veröffentlichungstag der Anmeldung:
**24.04.91 Patentblatt 91/17**

(84) Benannte Vertragsstaaten:
**CH DE FR GB LI**

(71) Anmelder: **BAYER AG**
**W-5090 Leverkusen 1 Bayerwerk(DE)**

(72) Erfinder: **Leverenz, Klaus, Dr.**
**Heymannstrasse 44**
**W-5090 Leverkusen 1(DE)**
Erfinder: **Hoppe, Manfred, Dr.**
**Kölner Strasse 233**
**W-5067 Kürten 2(DE)**

## (54) Azofarbstoffe.

(57) Wasserunlösliche Farbstoffe der Formel I

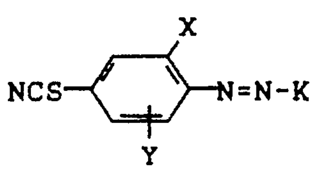

(I)

worin
K den Rest einer Kupplungskomponente der Anilinreihe,
X Cl, Br, CN oder COOZ,
Y H, Cl, Br oder CN und
Z $C_1$-$C_4$-Alkyl bedeuten,
eignen sich hervorragend zum Färben von Polyesterfasern, auf denen sie brillante Färbungen mit guten Allgemeinechtheiten erzeugen.

EP 0 423 563 A1

## AZOFARBSTOFFE

Gegenstand der Erfindung sind Dispersionsazofarbstoffe der Formel I

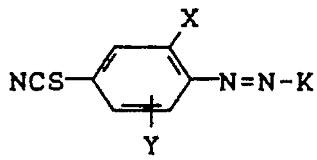

(I)

worin
K den Rest einer Kupplungskomponente der Anilinreihe,
X Cl, Br, CM oder COOZ,
Y H, Cl, Br oder CN und
Z $C_1$-$C_4$-Alkyl bedeuten.

Bevorzugte Farbstoffe entsprechen der Formel II

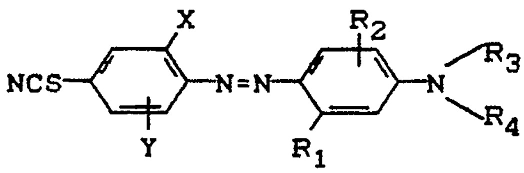

(II)

worin - unabhängig voneinander -
$R_1$ H, OH, Z, OZ, Cl, COOZ, $CONH_2$ oder NHAc,
$R_2$ H, Cl, Z, OZ oder COOZ,
$R_3$ und $R_4$ H, Z oder
gegebenenfalls durch CN, Cl, OH, OZ, COOZ, OCOZ, OCOOZ oder Phenyl substituiertes $C_2$-$C_5$-Alkyl sind, wobei
X, Y und Z die obengenannte Bedeutung haben und
Ac für einen Acylrest aus der Reihe COZ, $SO_2Z$, COOZ und $CONH_2$ steht.

Besonders bevorzugte Farbstoffe sind solche der Formeln I bzw. II,
worin
x COOZ oder CN,
Y H oder Cl,
$R_1$ $CH_3$, NHCOZ oder $SO_2Z$,
$R_2$ H,
$R_3$ und $R_4$ Z oder gegebenenfalls durch CN, OZ oder OCOZ substituiertes $C_2$-$C_4$-Alkyl bedeuten, wobei
Z wie oben definiert ist.

Unter diesen Farbstoffen sind wiederum solche der angegebenen Formeln bevorzugt,
worin
X für CN steht.

Ganz besonders bevorzugt sind Farbstoffe der Formeln I bzw. II,
worin
X, Y, Z und $R_2$ die vorstehend genannten Bedeutungen haben und
$R_1$ NHCOZ sowie
$R_3$ = $R_4$ $C_2H_4OZ$ bedeuten.

Dabei steht Z insbesondere für $CH_3$ oder $C_2H_5$.

Die neuen Farbstoffe werden vorzugsweise dadurch erhalten, das man diazotierte Amine der Formel III

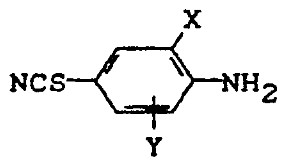

(III)

in üblicher Weise auf Kupplungskomponenten der Formel IV

K - H (IV)

kuppelt.

Vorzugsweise wird die Diazotierung in Eisessig/Phosphorsäure-Gemischen mittels Nitrosylschwefelsäure durchgeführt.

Sowohl Diazotierung als auch Kupplung können in Gegenwart von mit Wasser mischbaren organischen Lösungsmitteln, Dispergier- oder Netzmitteln und Emulgatoren erfolgen.

Gelegentlich empfiehlt sich auch der Zusatz von Impfkristallen.

Geeignete Lösungsmittel sind $C_1$-$C_4$-Alkohole, Glykole, Glykolether, Dialkylether, Ester und Ketone.

Farbstoffe der Formel

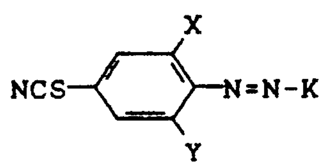

worin X und/oder Y Cyan bedeuten,

können vorteilhafterweise auch aus den entsprechenden Halogenazofarbstoffen (X/Y = Cl oder Br) durch Umsetzung mit Cyaniden hergestellt werden.

Derartige Halogen/Cyan-Austauschreaktionen sind in der Literatur vielfältig beschrieben worden (vergl. z.B. US-PS 3 962 209).

Die Amine der Formel III sind nur zum Teil bekannt. Man kann sie leicht nach an sich bekannten Methoden, z.B. durch Rhodanierung aromatischer Amine der Formel IV

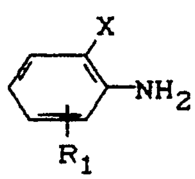

(IV)

mit Brom und Alkalirhodaniden in wäßrigen oder organischen oder wäßrig-organischen Lösungsmitteln wie Metha nol, Eisessig, Propionsäure herstellen, gegebenenfalls unter Zusatz von Mineralsäuren wie HBr oder $H_3PO_4$ (vgl. "Pharmazie", 32 , 195-215 (1977)).

Die Farbstoffe der Formel I bzw. II eignen sich zum Färben von Polyestermaterialien in orangen, roten und violetten Tönen. Die Färbungen zeichnen sich durch Brillanz, Farbstärke, Lichtechtheit und gute Thermomigrationsechtheiten aus.

Farbstoffe der Formel I bzw. II eignen sich auch für den textilen und nicht-textilen Thermotransferdruck. Auch diese Druckverfahren sind allgemein bekannt.

In den nachfolgenden Beispielen bedeuten "Teile" Gewichtsteile.

## Beispiele

### Beispiel 1

9 Teile 2-Amino-5-thiocyanato-benzoesäuremethylester werden in einer Mischung aus 60 Teilen Eisessig und 20 Teilen Propionsäure bei 0 - 5 °C mit 7,5 Teilen Nitrosylschwefelsäure diazotiert. Die Lösung des

Diazoniumsalzes fügt man zu einer Mischung von 9,1 Teilen N-Ethyl-N-(2-cyanethyl)-3-methylanilin, 0,5 Teilen Amidosulfonsäure, 50 Teilen Eisessig und 100 Teilen Eis und vervollständigt die Kupplung durch Zugabe von 12 Teilen 30 %iger Natronlauge. Der sich zunächst in harziger Form abscheidende Farbstoff der Formel

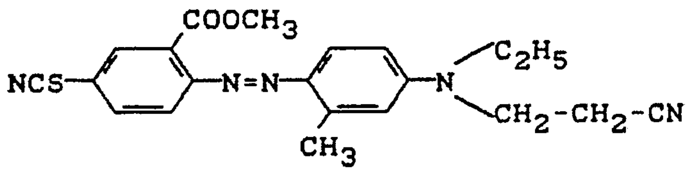

kristallisiert nach längerem Rühren. Das Absorptionsspektrum des Farbstoffs, aufgenommen in Dimethylformamid, besitzt ein Maximum bei 452 nm. Der Farbstoff färbt Polyethylenterephthalatfasern (PE) in klaren, orangefarbenen Tönen mit guter Licht-, Maß- und Sublimierechtheit.

Analog erhält man die Farbstoffe der Formel V:

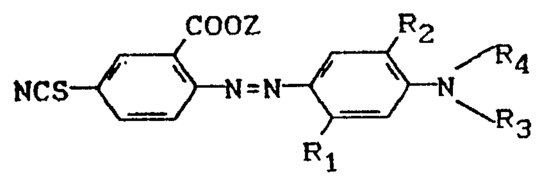

(V)

| Nr. | Z | $R_1$ | $R_2$ | $R_3$ | $R_4$ | $\lambda_{max}$ in nm | Farbton auf PE |
|---|---|---|---|---|---|---|---|
| 2 | $C_4H_9$ | H | H | $C_3H_7$ | $C_2H_4$-$COOCH_3$ | 440 | goldgelb |
| 3 | $C_2H_5$ | $CH_3$ | H | $C_4H_9$ | $C_2H_4$-CN | 454 | orange |
| 4 | $CH_3$ | $NHCOCH_3$ | H | $C_3H_7$ | $C_3H_7$ | 493 | scharlach |
| 5 | $CH_3$ | $NHCO_2H_5$ | H | $C_2H_4OCOCH_3$ | $C_2H_4OCOCH_3$ | 466 | orange |
| 6 | $C_2H_5$ | $NHCOC_4H_9$ | $OCH_3$ | $C_2H_5$ | $C_2H_4$-CN | 495 | scharlach |
| 7 | $CH_3$ | $CH_3$ | H | $CH_3$ | $C_2H_4$-CN | 450 | orange |
| 8 | $CH_3$ | $NHCOCH_3$ | H | $C_2H_5$ | $C_2H_4$-CN | 468 | orange |
| 9 | $C_2H_5$ | $NHCOCH_3$ | H | $C_2H_4COOCH_3$ | $C_2H_4COOCH_3$ | 462 | orange |

Die in diesen Beispielen verwendeten Diazokomponenten wurden hergestellt durch Rhodanierung der entsprechenden Anthranilsäureester nach dem von Neu in der Zeitschrift Pharmazie 3 (1948) 151 beschriebenen Verfahren.

Beispiel 10

15,9 Teile 2,5-Dichlor-4-thiocyanato-anilin werden in einer Mischung aus 35 Teilen konz. $H_2SO_4$ und 13 Teilen 85 %iger $H_3PO_4$ bei 0 - 5° C mit 13,2 Teilen Nitrosylschwefelsäure diazotiert.

Die Lösung des Diazoniumsalzes gibt man tropfenweise zu einer Mischung aus 15 Teilen N-Butyl-N-(2-cyanethyl)-3-methylanilin, 100 Teilen Methanol, 0,5 Teilen Amidosulfonsäure und 250 Teilen Eis und beendet die Kupplung durch Zutropfen von 100 Teilen 30 %iger Natronlauge.

Man erhält 27,5 Teile des Farbstoffs

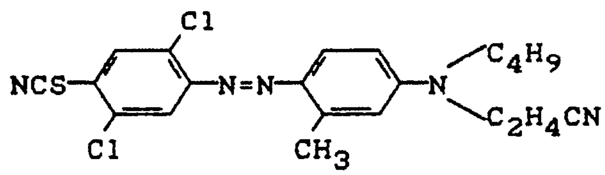

$\lambda_{max}$ 451 nm (DMF), der Polyesterfasern in orangefarbenen Tönen mit guter Lichtechtheit färbt.

Analog erhält man die Farbstoffe der Formel VI

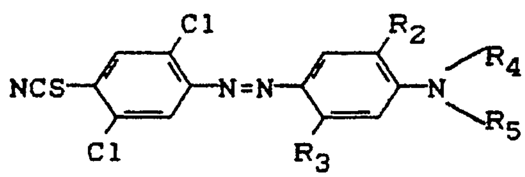

(VI)

| Nr. | $R_2$ | $R_3$ | $R_4$ | $R_5$ | $\lambda_{max}$ nm | Farbton PE |
|---|---|---|---|---|---|---|
| 11 | H | $CH_3$ | $C_2H_5$ | $C_2H_5$ | 468 | orange |
| 12 | H | $CH_3$ | $C_4H_9$ | $C_2H_4OCO_3$ | 457 | orange |
| 13 | H | $NHSO_2CH_3$ | $C_2H_4OCH_3$ | $C_2H_4OCH_3$ | 484 | rotst. orange |
| 14 | H | $NHCOCH_3$ | $C_3H_7$ | $C_3H_7$ | 512 | gelbst. rot |
| 15 | H | $NHCOCH_3$ | $C_2H_4OCH_3$ | $C_2H_4OCH_3$ | 508 | gelbst. rot |

Beispiel 16

7,6 Teile 2-Amino-5-thiocyanato-benzonitril werden bei 0 - 5° C in wäßriger Salzsäure diazotiert, die Lösung geklärt und mit einer Lösung von 13.2 Teilen 3-[-(Bis-2-methoxyethyl)amino]-acetanilid in wäßriger Salzsäure vereinigt. Die Kupplung muß durch Zugabe von 30 %iger Natronlauge bei 0 - 5° C zu Ende geführt werden. Der sich zunächst harzig abscheidende Farbstoff wird nach längerem Rühren kristallin. Er entspricht der Formel

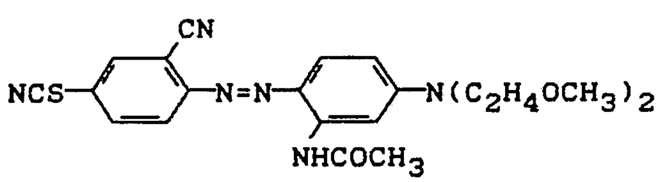

$\lambda_{max}$ 515 nm (DMF), und färbt Polyestermaterialien in klaren roten Tönen mit sehr guter Licht-, Sublimier-, Maß- und Thermomigrierechtheit.

Analog erhält man die Farbstoffe der Formel VII

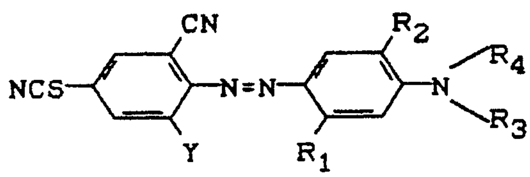

(VII)

| Nr. | Y | $R_1$ | $R_2$ | $R_3$ | $R_4$ | $\lambda_{max}$ in nm | Farbton auf PE |
|---|---|---|---|---|---|---|---|
| 17 | H | $NHCOCH_3$ | H | $C_2H_5$ | $C_2H_5$ | 520 | rot |
| 18 | H | $NHCOCH_3$ | H | $OCOCH_3$ | $OCOCH_3$ | 519 | rot |
| 19 | H | $CH_3$ | H | $C_4H_9$ | $C_2H_4CN$ | 493 | rotst. orange |
| 20 | H | $NHCOCH_3$ | $OCH_3$ | $C_2H_5$ | $C_2H_4CN$ | 533 | rubin |
| 21 | H | $NHCOC_3H_7$ | Cl | H | $C_2H_4OCH_3$ | 492 | rotst. orange |
| 22 | H | $NHSO_2CH_3$ | H | $C_2H_5$ | $C_2H_5$ | 512 | rot |
| 23 | H | $NHCOCH_3$ | Cl | H | $C_2H_4OH$ | 498 | scharlach |
| 24 | Br | $NHCOCH_3$ | $OCH_3$ | $C_2H_5$ | $C_2H_5$ | 592 | rotst. blau |
| 25 | H | $NHCOCH_3$ | H | $C_2H_4OC_2H_5$ | $C_2H_4OC_2H_5$ | 516 | rot |
| 26 | H | $NHCOC_2H_5$ | H | $C_2H_4OCH_3$ | $C_2H_4OCH_3$ | 515 | rot |

Das in diesen Beispielen verwendete 2-Amino-5-thiocyanato-benzonitril kann wie folgt hergestellt werden:

118 Teile 2-Aminobenzonitril und
123 Teile Natriumthiocyanat werden in
300 Teilen Eisessig und
150 Teilen 85 %iger Orthophosphorsäure bei ca. 10 °C langsam mit
200 Teilen Brom versetzt.

Das Reaktionsgemisch trägt man auf 500 Teile Eiswasser aus und läßt 150 Teile 30 %iger Natronlauge

zulaufen. Der kristalline Niederschlag wird abgesaugt, gewaschen und getrocknet. Man erhält ca. 155 Teile Rohprodukt (Schmp. 116° C), das in dieser oder unkristallisierter Form zur Farbstoffsynthese eingesetzt werden kann. Es ist mit geringen Mengen 2-Amino-5-brom-benzonitril verunreinigt.

Beispiel 27

6,1 Teile 2-Amino-5-thiocyanato-6-chlor-benzonitril werden in 40 Teilen Eisessig und 15 Teilen Propionsäure bei -5-0° C mit 5 Teilen Nitrosylschwefelsäure diazotiert.

Die so erhaltene Diazoniumsalz-Lösung wird in eine kalte (0° C) Lösung von 5,8 Teilen 1-(m-Tolyl)-3,5,5-Trimethylpyrazolin in 40 Teilen Eisessig und 20 Teilen Propionsäure so eingetragen, daß die Temperatur nicht über 5° C steigt.

Nach 30 Minuten wird das Produkt mit 50-70 Teilen Wasser ausgefällt, isoliert, gewaschen und getrocknet.

Man erhält 9 Teile des Farbstoffs der Formel VIII

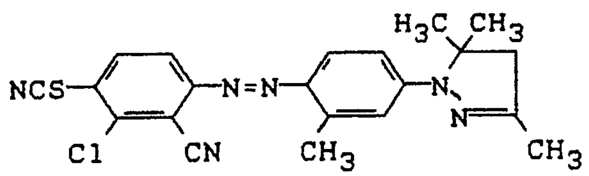

($\lambda_{max}$ (DMF) 536 nm), der Polyester in rotvioletten Tönen mit guten Naß- und Thermomigrierechtheit färbt.

Analog erhält man die Farbstoffe der Formel IX

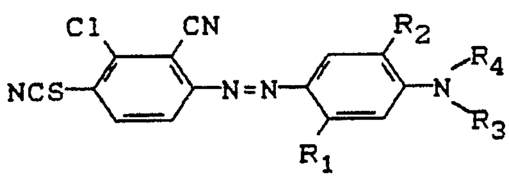

| Nr. | $R_1$ | $R_2$ | $R_3$ | $R_4$ | $\lambda_{max}$ in nm | Farbton auf PE |
|---|---|---|---|---|---|---|
| 28 | $NHCOCH_3$ | $OCH_3$ | $C_2H_4OCH_3$ | $C_2H_4OCH_3$ | 554 | Rotviolett |
| 29 | $CH_3$ | H | $C_2H_5$ | $C_2H_4$-O- 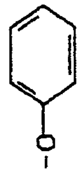 | 520 | gelbst. Rot |
| 30 | $NHCOCH_3$ | H | $C_2H_4OCH_3$ | $C_2H_4OCH_3$ | 526 | blaust. Rot |
| 31 | $CH_3$ | H | $CH_2CH_2CH_2CH_3$ | $C_2H_4OC_2H_5$ | 522 | Rot |
| 32 | $CH_3$ | H | $C_2H_5$ | $C_2H_4OCO$ 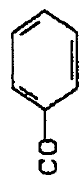 | 514,8 | gelbst. Rot |
| 33 | $CH_3$ | H | $C_2H_5$ | $CH_2$ 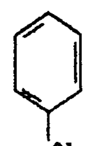 | 516 | gelbst. Rot |
| 34 | $CH_3$ | H | $C_2H_5$ | $C_2H_5$ | 523 | Rot |

Das in den Beispielen 27-34 verwendete 2-Amino-5-thiocyanato-6-chlor-benzonitril läßt sich wie folgt herstellen:

40 Teile 2-Amino-6-chlor-benzonitril werden in 100 Teilen Eisessig und 40 Teilen Propionsäure eingetragen. 53 Teile Kaliumthiocyanat werden zugegeben und auf 0 °C abgekühlt. In 2 Stunden werden 43 Teile Brom zugetropft, wobei die Temperatur nicht über 5 °C steigen soll. Nach 2 Stunden wird auf 20 °C aufgewärmt und auf 300 Teile Eis/Wasser ausgetragen, isoliert und getrocknet. Das so erhaltene Produkt (Smp. 136-145 °C) enthält geringe Mengen an bromierten Aminen. Es kann durch Umkristallisation aus

DMF/Wasser oder aber ungereinigt zur Farbstoffsynthese verwendet werden.

## Ansprüche

1. Dispersionsazofarbstoffe der Formel I

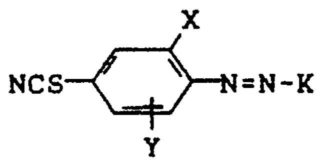

(I)

worin
K den Rest einer Kupplungskomponente der Anilinreihe,
X Cl, Br, CN oder COOZ,
Y H, Cl, Br oder CN und
Z $C_1$-$C_4$-Alkyl bedeuten.

2. Farbstoffe gemäß Anspruch 1 der Formel II

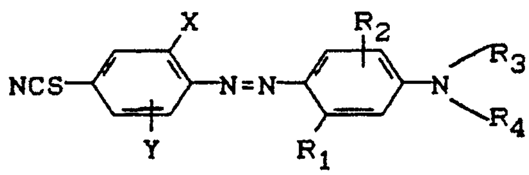

(II)

worin - unabhängig voneinander -
$R_1$ H, OH, Z, OZ, Cl, COOZ, $CONH_2$ oder NHAc,
$R_2$ H, Cl, Z, OZ oder COOZ,
$R_3$ und $R_4$ H, Z oder
gegebenenfalls durch CN, Cl, OH, OZ, COOZ,
OCOZ, OCOOZ oder Phenyl substituiertes $C_2$-$C_5$-Alkyl sind,
wobei
X, Y und Z die obengenannte Bedeutung haben und
Ac für einen Acylrest aus der Reihe COZ, $SO_2Z$, COOZ und $CONH_2$ steht.

3. Farbstoffe gemäß Anspruch 1 oder 2, dadurch gekennzeichnet, daß
X COOZ oder CN,
Y H oder Cl,
$R_1$ $CH_3$, NHCOZ oder $SO_2Z$,
$R_2$ H,
$R_3$ und $R_4$ Z oder gegebenenfalls durch CN, OZ oder OCOZ substituiertes $C_2$-$C_4$-Alkyl bedeuten,
wobei
Z wie oben definiert ist.

4. Farbstoffe gemäß Anspruch 1 oder 2, dadurch gekennzeichnet, daß
X für CN steht.

5. Farbstoffe gemäß Ansprüchen 1 bis 4, dadurch gekennzeichnet, daß
$R_1$ = NHCOZ und
$R_3$ = $R_4$ = $C_2H_4OZ$ bedeuten,
wobei die übrigen Reste die obengenannten Bedeutungen haben.

6. Farbstoff der Formel

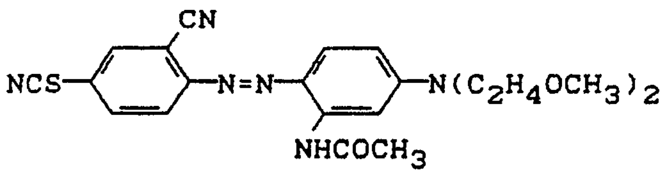

7. Verfahren zum Färben und Bedrucken von Polyestermaterialien, dadurch gekennzeichnet, daß man Farbstoffe gemäß Ansprüchen 1 bis 6 verwendet.

Europäisches Patentamt

# EUROPÄISCHER RECHERCHENBERICHT

Nummer der Anmeldung

**EP 90 11 9138**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 187 855 (ICI)<br>* Seite 11, Beispiel 25; Ansprüche 7,8 * | 1,7 | C 09 B 29/00 |
| Y | FR-A-1 354 582 (ICI)<br>* Seite 3, Beispiel 1; Seite 5, Beispiel 13; Anspruch C * | 1-7 | |
| Y | CH-B-5 496 27 (SANDOZ)<br>* Spalte 2, Zeilen 13-22; Spalte 4, Beispiel 14 * | 1-7 | |
| A | DERWENT JAPANESE PATENTS REPORTS, Sektion Textiles, Papers, Cellulose, Woche 4.2.71 - 10.2.71, Band 5, Nr. 6, Sektion F, Seite 10;<br>& JP-A-71 05 274 (SUMITOMO CHEM. CO., LTD) 09-02-1971<br>* Zusammenfassung * | 1-7 | |
| A | DE-A-2 339 984 (ICI)<br>* Seite 15, Beispiel 26<br>* & NL-A-7 311 236 | 1-7 | |

RECHERCHIERTE SACHGEBIETE (Int. Cl.5)

C 09 B

Der vorliegende Recherchenbericht wurde für alle Patentansprüche erstellt

| Recherchenort | Abschlußdatum der Recherche | Prüfer |
|---|---|---|
| Den Haag | 22 Januar 91 | KETTERER M. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument